# EUROPEAN PATENT APPLICATION

(11) **EP 4 848 355 A1**
(43) Date of publication of application: **02.12.2026**
(21) Application number: 25744927.2
(22) Date of filing: 16.01.2025
(51) Int. Cl.: H01M 4/139, H01G 11/30, H01M 4/04, H01M 4/62, H01M 4/66

(54) **SOLVENT COMPOSITION FOR ELECTRODE-FORMING PASTE, ELECTRODE-FORMING PASTE, METHOD FOR MANUFACTURING ELECTRODE, AND METHOD FOR MANUFACTURING SECONDARY BATTERY**

(30) Priority: 22.01.2024 JP 2024007385; 22.04.2024 JP 2024068939
(71) Applicant: Daicel Corporation, Osaka-shi, Osaka 530-0011 (JP)
(72) Inventor: NAGAI, Rumi, Tokyo 108-8230 (JP); IKEDA, Banri, Tokyo 108-8230 (JP); OKAMOTO, Yusuke, Tokyo 108-8230 (JP)
(74) Representative: Grünecker Patent- und Rechtsanwälte PartG mbB
(86) International application number: PCT/JP2025/001192
(87) International publication number: WO 2025/158997

(57) **Abstract**

Provided is a solvent composition for an electrode-forming paste that exhibits excellent crack resistance in electrode production and can reduce the amount of solvent remaining in the electrode. A solvent composition for an electrode-forming paste, the solvent containing a solvent (A) having a boiling point of from 180°C to 240°C and a hydrogen bond term δH of the Hansen solubility parameter of from 4 to 13 (J/cm³)^{0.5}, and a solvent (B) having a boiling point higher than the boiling point of the solvent (A) and a hydrogen bond term δH of the Hansen solubility parameter of from 4 to 13 (J/cm³)^{0.5}, in which the boiling point of the solvent (B) is higher than 240°C and 300°C or lower, or higher than the boiling point of the solvent (A) by 25°C or more.

## Description

### Technical Field

The present disclosure relates to a solvent composition for an electrode-forming paste, an electrode-forming paste, a method for producing an electrode, and a method for producing a secondary battery. More specifically, the present disclosure relates to a solvent composition used for a paste for forming an electrode, an electrode-forming paste using the solvent composition, a method for producing an electrode using the electrode-forming paste, and a method for producing a secondary battery using the electrode. The present application claims priority to JP 2024-007385 filed in Japan on January 22, 2024 and JP 2024-068939 filed in Japan on April 22, 2024, the contents of which are incorporated herein by reference.

### Background Art

An electrode for a lithium ion battery is formed by applying an electrode-forming paste to the surface of a current collector such as a metal foil and drying the paste. Water is used as a main solvent in the electrode-forming paste (e.g., see Patent Documents 1 to 3). In recent years, there has been a demand for a lithium ion battery having a higher capacity. For this purpose, it is necessary to form a thick electrode film.

To form a thick film, a relatively large amount of electrode-forming paste is applied to the current collector, but in this case, there is a problem that cracks may occur in the electrode. When cracks occur, the uniform conductive network of the electrode collapses, which causes a decrease in the conductivity of the electrode and shortens battery life.

To improve the flexibility and adhesion of an electrode, it is known to use a water-soluble additive having a high boiling point and having from 2 to 20 oxygen atoms per molecule (e.g., 1,3-butylene glycol, propanediol, or ethylene glycol) (e.g., see Patent Document 4).

### Citation List

### Patent Document

Patent Document 1: WO 2010/008058
Patent Document 2: JP H11-283630 A
Patent Document 3: JP 2023-113925 A
Patent Document 4: WO 2013/115368

### Summary of Invention

### Technical Problem

When the water-soluble additive having a high boiling point is used, cracks are less likely to occur in the resulting electrodes, but the water-soluble additive having a high boiling point is likely to remain in the electrodes (particularly, thick-film electrodes having a density of 200 g/m² or more) after vacuum drying. The remaining solvent permeates into the electrolyte and reacts with lithium, thereby causing deterioration in battery performance. This makes an increase in the capacity difficult.

Thus, an object of the present disclosure is to provide a solvent composition for an electrode-forming paste that exhibits excellent crack resistance in electrode production and can reduce the amount of solvent remaining in the electrode.

### Solution to Problem

The inventors of the present disclosure have assumed that the cause of the occurrence of cracks in forming a thick-film electrode is that, since a coating film before drying for forming an electrode contains a large amount of water, in the drying of the coating film with hot air, water is rapidly volatilized and drying starts from the end portion of the coating film. Then, the technology of the present disclosure has been found based on such findings.

The present disclosure provides a solvent composition for an electrode-forming paste, containing:
a solvent (A) having a boiling point of from 180°C to 240°C and a hydrogen bond term δH of the Hansen solubility parameter of from 4 to 13 (J/cm³)^{0.5}; and
a solvent (B) having a boiling point higher than the boiling point of the solvent (A) and a hydrogen bond term δH of the Hansen solubility parameter of from 4 to 13 (J/cm³)^{0.5},
in which
the boiling point of the solvent (B) is higher than 240°C and 300°C or lower.

The present disclosure also provides a solvent composition for an electrode-forming paste, containing:
a solvent (A) having a boiling point of from 180°C to 240°C and a hydrogen bond term δH of the Hansen solubility parameter of from 4 to 13 (J/cm³)^{0.5}; and
a solvent (B) having a boiling point higher than the boiling point of the solvent (A) and a hydrogen bond term δH of the Hansen solubility parameter of from 4 to 13 (J/cm³)^{0.5},
in which
the boiling point of the solvent (B) is higher than the boiling point of the solvent (A) by 25°C or more.

The solvent (A) preferably has a solubility in water of 5 g/100 g or more, and the solvent (B) preferably has a solubility in water of 1 g/100 g or more.

The solvent (A) preferably has an ether skeleton and/or an ester skeleton.

It is preferable that the solvent (A) be one or more selected from the group consisting of tripropylene glycol dimethyl ether, diethylene glycol butyl methyl ether, diethylene glycol diethyl ether, dipropylene glycol methyl ether acetate, triethylene glycol dimethyl ether, 1,3-butylene glycol diacetate, diethylene glycol monoethyl ether acetate, propylene glycol diacetate, dipropylene glycol monopropyl ether, dipropylene glycol monobutyl ether, and diethylene glycol monobutyl ether, and
the solvent (B) be one or more selected from the group consisting of triethylene glycol butyl methyl ether, diethylene glycol monobutyl ether acetate, tetraethylene glycol dimethyl ether, tripropylene glycol monomethyl ether, diethylene glycol monohexyl ether, triacetin, triethylene glycol monobutyl ether, ethylene glycol monophenyl ether, and diethylene glycol monophenyl ether.

A ratio (WA/W) of a mass (WA) of the solvent (A) to a mass (W) of total organic solvents contained in the solvent composition is preferably 50 mass% or more.

The present disclosure also provides an electrode-forming paste containing the solvent composition for an electrode-forming paste, water, an electrode active material, and a binder.

A content ratio of the solvent composition for an electrode-forming paste is preferably from 0.1 to 5.0 mass% based on a total amount of the electrode-forming paste.

The present disclosure also provides an electrode-forming paste containing an organic solvent, water, an electrode active material, and a binder, in which
a pre-dried film produced by applying the electrode-forming paste on a copper foil to a thickness of 600 µm and hot-air drying the electrode-forming paste at 110°C for 10 minutes has a remaining amount of the organic solvent of 50 ppm or more measured by a GC-MS method; and
a dried film produced by vacuum drying the pre-dried film at an absolute pressure of 1500 Pa or less for 300 minutes has a remaining amount of the organic solvent of 40 ppm or less measured by a GC-MS method.

The present disclosure also provides a method for producing an electrode including an electrode active material layer on a current collector, the method including:
applying the electrode-forming paste described in claim 7 onto the current collector to form a coating film; evaporating water from the coating film to form a pre-dried film; and vacuum drying the pre-dried film to form the electrode active material layer.

In the evaporating, the pre-dried film is preferably formed by drying under a drying condition in which a remaining amount of the organic solvent obtained by measuring the pre-dried film by a GC-MS method is 50 ppm or more.

In the vacuum drying, the electrode active material layer is preferably formed by drying under a drying condition in which a remaining amount of the organic solvent obtained by measuring the electrode active material layer by a GC-MS method is 40 ppm or less.

The present disclosure also provides a method for producing a secondary battery, the method including producing an electrode by the method for producing an electrode, and producing a secondary battery using the produced electrode.

### Advantageous Effects of Invention

The solvent composition for an electrode-forming paste of the present disclosure is used for an electrode-forming paste, and thus, crack resistance in electrode production is excellent, and the amount of the solvent remaining in the electrode can be reduced.

### Description of Embodiments

### Solvent Composition for Electrode-Forming Paste

A solvent composition for an electrode-forming paste (it may be simply referred to as "solvent composition") of the present disclosure contains a solvent having a boiling point of from 180°C to 240°C and a hydrogen bond term δH of the Hansen solubility parameter of from 4 to 13 (J/cm³)^{0.5}, and another solvent having a boiling point higher than that of the solvent and a hydrogen bond term δH of the Hansen solubility parameter of from 4 to 13 (J/cm³)^{0.5}. Note that, as used herein, the solvent having a boiling point of from 180°C to 240°C and a hydrogen bond term δH of the Hansen solubility parameter of from 4 to 13 (J/cm³)^{0.5} may be referred to as a "solvent (A)". In addition, the other solvent having a boiling point higher than that of the solvent (A) and having a hydrogen bond term δH of the Hansen solubility parameter of from 4 to 13 (J/cm³)^{0.5} may be referred to as a "solvent (B)". Only one type of solvent may be used as each of the solvent (A) and solvent (B), or two or more types thereof may be used.

The solvent composition of the present disclosure contains the solvent (A) and the solvent (B), and thus, in applying and drying a paste in which the solvent composition is used, the solvent of the paste is prevented from being rapidly volatilized, and cracks are less likely to occur in drying. Then, by further drying, the solvent composition is easily volatilized, and the amount of the solvent remaining in the electrode is reduced.

### Solvent (A)

The boiling point of the solvent (A) is from 180 to 240°C. The boiling point is preferably 200°C or higher, and may be 210°C or higher, or 220°C or higher. In addition, the boiling point is preferably 235°C or lower, more preferably 230°C or lower, and further preferably 220°C or lower. When the boiling point is 180°C or higher, rapid volatilization of the solvent in drying of the paste is prevented, and cracks are less likely to occur in drying. When the boiling point is 240°C or lower, in removing the remaining solvent, the solvent is easily volatilized and the amount of the remaining solvent is reduced.

The hydrogen bond term δH of the Hansen solubility parameter of the solvent (A) is from 4 to 13 (J/cm³)^{0.5}. The δH is preferably 4.5 (J/cm³)^{0.5} or more, and may be 5 (J/cm³)^{0.5} or more, 6 (J/cm³)^{0.5} or more, or 7 (J/cm³)^{0.5} or more. In addition, the δH is preferably 10 (J/cm³)^{0.5} or less, and may be 9 (J/cm³)^{0.5} or less, or 8 (J/cm³)^{0.5} or less. The δH is 4 (J/cm³)^{0.5} or more, and thus the hydrogen bonding force with water contained in the paste as a solvent is moderately high, the water solubility is excellent, rapid volatilization of water is prevented in drying the paste, and cracks are less likely to occur in drying. The δH is 13 (J/cm³)^{0.5} or less, and thus the hydrogen bonding force with water is not too high, and in removing the remaining solvent, the remaining solvent is easily volatilized and the amount of the remaining solvent is reduced. Note that, as used herein, the Hansen solubility parameter may be referred to as "SP value" and the hydrogen bond term δH may be simply represented by "δH". The SP value and δH can be calculated using the HSPiP (ver. 5.4) (Hansen Solubility Parameters in Practice) software.

The solubility of the solvent (A) in water (solubility in 100 g of water) is preferably 5 g/100 g or more, more preferably 10 g/100 g or more, and further preferably 50 g/100 g or more. When the solubility is 5 g/100 g or more, in drying the paste, the separation from water contained in the paste as a solvent is less likely to occur, and smooth electrodes are easily formed. Note that, as used herein, the solubility in 100 g of water may be referred to as "water solubility".

The solvent (A) preferably has an ether skeleton and/or an ester skeleton. Examples of the solvents having an ether skeleton include polyalkylene glycols, (poly)alkylene glycol mono- or dialkyl ethers, polyalkylene glycol monoesters, and (poly)alkylene glycol alkyl ether monoesters. Examples of the solvents having an ester skeleton include (poly)alkylene glycol monoesters, (poly)alkylene glycol alkyl ether monoesters, (poly)alkylene glycol diesters, and esterified products of terpineol or a hydrogenated product thereof. The carboxylic acid constituting the ester skeleton is preferably an aliphatic carboxylic acid. From the viewpoint that the reactivity with lithium is preferably low, the solvent (A) preferably has one or less hydroxy groups, and more preferably has no hydroxy groups.

Specific examples of the solvent (A) include (poly)alkylene glycol monoalkyl ethers such as diethylene glycol monoethyl ether, diethylene glycol monobutyl ether, diethylene glycol monoisopropyl ether, dipropylene glycol monomethyl ether, dipropylene glycol monopropyl ether, and dipropylene glycol monobutyl ether; (poly)alkylene glycol dialkyl ethers such as triethylene glycol dimethyl ether, tripropylene glycol dimethyl ether, diethylene glycol butyl methyl ether, diethylene glycol diethyl ether, dipropylene glycol butyl methyl ether, and dipropylene glycol methyl propyl ether; (poly)alkylene glycol monoalkyl ether monoesters such as dipropylene glycol methyl ether acetate, ethylene glycol monobutyl ether acetate, and diethylene glycol monoethyl ether acetate; (poly)alkylene glycol diesters such as 1,3-butylene glycol diacetate, 1,4-butanediol diacetate, and propylene glycol diacetate; and terpene-based alcohols such as α-terpineol, dihydroterpineol, and 3-hydroxy-3-methylbutyl acetate.

Among these, the solvent (A) is preferably one or more selected from the group consisting of tripropylene glycol dimethyl ether, diethylene glycol butyl methyl ether, diethylene glycol diethyl ether, dipropylene glycol methyl ether acetate, triethylene glycol dimethyl ether, 1,3-butylene glycol diacetate, diethylene glycol monoethyl ether acetate, propylene glycol diacetate, dipropylene glycol monopropyl ether, dipropylene glycol monobutyl ether, and diethylene glycol monobutyl ether.

A ratio (WA/W) of a mass (WA) of a solvent (A) to a mass (W) of total organic solvents contained in the solvent composition is preferably 20 mass% or more, more preferably 30 mass% or more, further preferably 50 mass% or more, and particularly preferably 70 mass% or more. When the ratio is 20 mass% or more, rapid volatilization of the solvent is prevented in drying of the paste, cracks are less likely to occur in drying, the solvent composition is easily volatilized in removing the remaining solvent, and the amount of the solvent remaining in the electrode is reduced. The ratio is preferably 95 mass% or less. When the ratio is 95 mass% or less, the amount of the solvent (B) contained can be sufficient.

Note that a solvent (B2) described later may also correspond to the solvent (A). In such a case, the content ratio of each of the solvents is calculated as follows: if the solvent composition contains a solvent (B1) described later and the solvent (B2), the solvent (B2) is assumed to be the solvent (A); if the solvent (B1) is not contained, the solvent (B2) is assumed to be the solvent (B).

### Solvent (B)

The boiling point of the solvent (B) is not particularly limited as long as it is higher than the boiling point of the solvent (A), and is appropriately selected depending on the type of the solvent (A) to be used.

The boiling point of the solvent (B) is, for example, higher than 240°C and 300°C or lower. Among the solvents (B), those having a boiling point of higher than 240°C and 300°C or less may be referred to as "solvents (B1)". The boiling point of the solvent (B1) is preferably 250°C or higher, and more preferably 260°C or higher. In addition, the boiling point is preferably 290°C or lower, and more preferably 280°C or lower. When the boiling point is higher than 240°C, rapid volatilization of the solvent in drying of the paste is prevented, and cracks are less likely to occur in drying. When the boiling point is 300°C or lower, the amount of the remaining solvent is reduced.

The boiling point of the solvent (B) is higher than that of the solvent (A) by, for example, 25°C or more. Among the solvents (B), those having a boiling point higher than that of the solvents (A) by 25°C or more may be referred to as "solvents (B2)". When the solvent composition contains a plurality of solvents (A), the boiling point of the solvent (B2) may be higher than that of at least one of the solvents (A) by 25°C or more. The boiling point difference between the solvent (B2) and the solvent (A) is preferably 40°C or more, more preferably 50°C or more, and further preferably 60°C or more. Also, the boiling point difference is preferably 120°C or less, more preferably 90°C or less, and further preferably 80°C or less. When the boiling point difference is 25°C or more, rapid volatilization of the solvent in drying of the paste is prevented, and cracks are less likely to occur in drying. When the boiling point difference is 120°C or less, the amount of the remaining solvent is reduced.

The solvents (A) and (B2) can overlap one another. For example, among the compounds exemplified and described as the solvents (A), those having a boiling point higher than that of the compounds used as the solvents (A) by 25°C or more and 240°C or less can be used as the solvents (B2).

The solvents (B1) and (B2) may overlap each other, and may be the same solvent. In addition, in a case where two or more types of solvents (B) are used, two different types of solvents may be used from the solvents (B1), two different types of solvents may be used from the solvents (B2), or two types of solvents may be used from each of the solvents (B1) and the solvents (B2).

The hydrogen bond term δH of the Hansen solubility parameter (SP value) of the solvent (B) is from 4 to 13 (J/cm³)^{0.5}. The δH is preferably 4.5 (J/cm³)^{0.5} or more, and may be 5 (J/cm³)^{0.5} or more, 6 (J/cm³)^{0.5} or more, or 7 (J/cm³)^{0.5} or more. In addition, the δH is preferably 10 (J/cm³)^{0.5} or less, and may be 9 (J/cm³)^{0.5} or less, or 8 (J/cm³)^{0.5} or less. The δH is 4 (J/cm³)^{0.5} or more, and thus the hydrogen bonding force with water contained in the paste as a solvent is moderately high, the water solubility is excellent, rapid volatilization of water is prevented in drying the paste, and cracks are less likely to occur in drying. The δH is 13 (J/cm³)^{0.5} or less, and thus the hydrogen bonding force with water is not too high, and in removing the remaining solvent, the remaining solvent is easily volatilized and the amount of the remaining solvent is reduced. The SP value and δH can be calculated using the HSPiP (ver. 5.4) (Hansen Solubility Parameters in Practice) software.

The solubility of the solvent (B) in water (solubility in 100 g of water) is preferably 1 g/100 g or more, more preferably 10 g/100 g or more, and further preferably 50 g/100 g or more. When the solubility is 1 g/100 g or more, the separation from water contained in the paste as a solvent is less likely to occur in drying the paste, and smooth electrodes are easily formed. In addition, the use of the solvent (A) having a high solubility in water also has an advantage that the solvent (B) having a low solubility in water can be used.

The solvent (B) preferably has an ether skeleton and/or an ester skeleton. Examples of the solvents having an ether skeleton include (poly)alkylene glycol mono- or dialkyl ethers, polyalkylene glycol monoesters, and (poly)alkylene glycol alkyl ether monoesters. Examples of the solvents having an ester skeleton include (poly)alkylene glycol monoesters, (poly)alkylene glycol alkyl ether monoesters, (poly)alkylene glycol diesters, and (poly)glycerin esters. The carboxylic acid constituting the ester skeleton is preferably an aliphatic carboxylic acid. From the viewpoint that the reactivity with lithium is preferably low, the solvent (B) preferably has one or less hydroxy groups, and more preferably has no hydroxy groups.

Specific examples of the solvent (B) include (poly)alkylene glycol monoalkyl ethers such as diethylene glycol monohexyl ether, diethylene glycol mono-2-ethylhexyl ether, ethylene glycol monophenyl ether, diethylene glycol monophenyl ether, ethylene glycol monobenzyl ether, propylene glycol monophenyl ether, triethylene glycol monomethyl ether, polyethylene glycol monomethyl ether, triethylene glycol monobutyl ether, and tripropylene glycol monomethyl ether; (poly)alkylene glycol dialkyl ethers such as diethylene glycol dibutyl ether, triethylene glycol butyl methyl ether, tetraethylene glycol dimethyl ether, and tri(isopropylene glycol)methyl propyl ether; (poly)alkylene glycol monoether monoesters such as diethylene glycol monobutyl ether acetate; (poly)alkylene glycol diesters such as 1,6-hexanediol diacetate; and (poly)glycerin esters such as triacetin.

Among these, the solvent (B) is preferably one or more selected from the group consisting of triethylene glycol butyl methyl ether, diethylene glycol monobutyl ether acetate, tetraethylene glycol dimethyl ether, tripropylene glycol monomethyl ether, diethylene glycol monohexyl ether, triacetin, triethylene glycol monobutyl ether, ethylene glycol monophenyl ether, and diethylene glycol monophenyl ether.

A ratio (WB/W) of a mass (WB) of the solvent (B) to the mass (W) of total organic solvents contained in the solvent composition is preferably 5 mass% or more. When the ratio is 5 mass% or more, rapid volatilization of the solvent is prevented in drying of the paste, cracks are less likely to occur in drying, the solvent composition is easily volatilized in removing the remaining solvent, and the amount of the solvent remaining in the electrode is reduced. The ratio is preferably 80 mass% or less, more preferably 70 mass% or less, further preferably 50 mass% or less, and particularly preferably 30 mass% or less. When the ratio is 80 mass% or less, the amount of the solvent (A) contained can be sufficient.

A ratio ((WA + WB)/W) of a sum of the mass (WA) of the solvent (A) and the mass (WB) of the solvent (B) to the mass (W) of total organic solvents contained in the solvent composition is preferably 60 mass% or more, more preferably 70 mass% or more, further preferably 80 mass% or more, and particularly preferably 90 mass% or more, and may be 93 mass% or more, 96 mass% or more, 98 mass% or more, 99 mass% or more, or 100 mass%.

A ratio (WF/W) of a mass (F) of a compound having one or more groups selected from the group consisting of a hydroxy group, an amide group, and a ketone group to the mass (W) of total organic solvents contained in the solvent composition is preferably 40 mass% or less, and more preferably 10 mass% or less.

The solvent composition is a solvent composition for an electrode-forming paste, which is used for a paste for forming an electrode. The solvent composition can be produced by mixing the solvent (A) and the solvent (B). The mixing can be performed by a known or typical method.

The solvent composition for an electrode-forming paste of the present disclosure is used for an electrode-forming paste, and thus, crack resistance in electrode production is excellent, and the amount of the solvent remaining in the electrode can be reduced. Therefore, a thick film electrode can be produced using the composition for an electrode-forming paste of the present disclosure. This makes it possible to produce a lithium ion battery having a high capacity.

### Electrode-Forming Paste

### First Electrode-Forming Paste

An electrode-forming paste can be prepared using the solvent composition. The electrode-forming paste contains, for example, the solvent composition, water, an electrode active material, and a binder. Note that, as used herein, the electrode-forming paste containing the solvent composition, water, an electrode active material, and a binder may be referred to as a "first electrode-forming paste". The first electrode-forming paste may further contain a conductive aid.

As the electrode active material, a known or typical material can be used. The electrode active material may be either a positive electrode active material or a negative electrode active material. Only one type of the electrode active material may be used, or two or more types thereof may be used.

Examples of the positive electrode active material include compounds containing a lithium element and a transition metal element, i.e., lithium transition metal composite oxides. Examples of the lithium transition metal composite oxide include a lithium transition metal composite oxide having a layered structure, a lithium transition metal composite oxide having a spinel structure, and a lithium transition metal-containing phosphate having an olivine structure.

Specific examples of the lithium transition metal composite oxide include a lithium cobalt-containing composite oxide, a lithium manganese-containing composite oxide, a lithium nickel-containing composite oxide, a lithium titanium-containing composite oxide, a lithium nickel manganese-containing composite oxide, a lithium nickel cobalt manganese-containing composite oxide, and a lithium nickel cobalt aluminum-containing composite oxide.

Examples of the lithium cobalt-containing composite oxide include lithium cobaltate. Examples of the lithium manganese-containing composite oxide include lithium manganate. Examples of the lithium nickel-containing composite oxide include lithium nickelate. Examples of the lithium titanium-containing composite oxide include lithium titanate.

Examples of the negative electrode active material include metal Li, alloys thereof, such as tin alloys, silicon alloys, and lead alloys, and other alloy-based materials; metal oxide-based materials such as Li_{X}Fe₂O₃, Li_{X}Fe₃O₄, Li_{X}WO₂, lithium titanate, lithium vanadate, and lithium silicate; conductive polymer-based materials such as polyacetylene and poly-p-phenylene; amorphous-based carbonaceous materials such as soft carbon and hard carbon, artificial graphite such as highly graphitized carbon materials, carbonaceous powders such as natural graphite, and carbon black, mesophase carbon black, resin-baked carbon materials, vapor grown carbon fibers, carbon fibers and other carbonaceous-based materials.

As the conductive aid, a known or typical conductive aid can be used, and examples thereof include carbon materials such as carbon black (e.g., acetylene black, Ketjen black), carbon fiber, and graphite. Only one type of the conductive aid may be used, or two or more types thereof may be used.

As the binder, a known or typical binder can be used, and examples thereof include an acrylic resin, a polyurethane resin, a polyester resin, a phenol resin, an epoxy resin, a phenoxy resin, a urea resin, a melamine resin, an alkyd resin, a formaldehyde resin, a silicon resin, a fluororesin, a cellulose resin such as carboxymethyl cellulose, a synthetic rubber such as a styrenebutadiene rubber and a fluororubber, a conductive resin such as polyaniline and polyacetylene, a halogenated vinyl resin such as polyvinylidene fluoride (PVdF) and polytetrafluoroethylene (PTFE), and a polyalkylene oxide such as polyethylene oxide (PEO). Only one type of the binder may be used, or two or more types thereof may be used.

The content ratio of the solvent composition in the electrode-forming paste is preferably from 0.1 to 5.0 mass%, and more preferably from 0.3 to 3.0 mass%, based on the total amount (100 mass%) of the electrode-forming paste. When the content ratio is within the above range, rapid volatilization of the solvent is prevented in drying of the paste, cracks are less likely to occur in drying, the solvent composition is easily volatilized in removing the remaining solvent, and the amount of the solvent remaining in the electrode is reduced.

The content ratio of the solvent (A) in the electrode-forming paste is preferably from 0.05 to 5.0 mass%, more preferably from 0.15 to 3.0 mass%, and particularly preferably from 0.5 to 2.0 mass%, based on the total amount (100 mass%) of the electrode-forming paste.

The content ratio of the solvent (B) in the electrode-forming paste is preferably from 0.01 to 2.5 mass%, more preferably from 0.05 to 0.2 mass%, and particularly preferably from 0.1 to 0.15 mass%, based on the total amount (100 mass%) of the electrode-forming paste.

The content ratio of the water in the electrode-forming paste is preferably from 25 to 60 mass%, and more preferably from 35 to 50 mass%, based on the total amount (100 mass%) of the electrode-forming paste.

### Second Electrode-Forming Paste

The present disclosure also provides an electrode-forming paste containing an organic solvent, water, an electrode active material, and a binder, in which a pre-dried film produced by applying the electrode-forming paste on a copper foil to a thickness of 600 µm and hot-air drying the electrode-forming paste at 110°C for 10 minutes has the remaining amount of the organic solvent of 50 ppm or more measured by a GC-MS method; and a dried film produced by vacuum drying the pre-dried film at an absolute pressure of 1500 Pa or less for 300 minutes has the remaining amount of the organic solvent of 20 ppm or less measured by a GC-MS method. Note that, as used herein, the electrode-forming paste may be referred to as a "second electrode-forming paste". Also, as used herein, the organic solvent (including the solvent composition as a concept) and water may be collectively referred to as a "solvent". The second electrode-forming paste may further contain a conductive aid.

As the electrode active material, the conductive aid, and the binder in the second electrode-forming paste, those exemplified and described as those in the first electrode-forming paste described above can be used.

Examples of the organic solvents include alcohols such as methanol, ethanol, 1-propanol, 2-propanol, butanol, pentanol, hexanol, octanol, and diacetone alcohol; esters such as ethyl acetate, butyl acetate, ethyl lactate, propylene glycol monomethyl ether acetate, propylene glycol monoethyl ether acetate, and γ-butyrolactone; ethers such as diethyl ether, ethylene glycol monomethyl ether, ethylene glycol monoethyl ether, ethylene glycol monobutyl ether, diethylene glycol monomethyl ether, and diethylene glycol monoethyl ether; ketones such as acetone, methyl ethyl ketone, methyl isobutyl ketone, acetylacetone, and cyclohexanone; amides such as dimethylformamide, N,N-dimethylacetoacetamide, and N-methylpyrrolidone; and glycols such as ethylene glycol, diethylene glycol, and propylene glycol. Only one type of the organic solvent may be used, or two or more types thereof may be used.

In addition, the solvent composition may be used as the organic solvent. In a case where the solvent composition is used as the organic solvent, the second electrode-forming paste also corresponds to the first electrode-forming paste.

A pre-dried film produced by applying the electrode-forming paste on a copper film to a thickness of 600 µm, and hot-air drying at 110°C for 10 minutes has the remaining amount of the organic solvent of 50 ppm or more, or preferably 100 ppm or more measured by a GC-MS method. When the remaining amount is 50 ppm or more, cracks are less likely to occur in the pre-dried film and the electrodes produced thereafter, and warpage and swelling at the end portion are less likely to occur. The remaining amount of the first electrode-forming paste is preferably within the above range.

A dried film produced by vacuum drying the pre-dried film of the electrode-forming paste at an absolute pressure of 1500 Pa or less for 300 minutes has the remaining amount of the organic solvent of 40 ppm or less, preferably 30 ppm or less, more preferably 25 ppm or less, or further preferably 15 ppm or less measured by a GC-MS method. When the remaining amount is 40 ppm or less, the amount of the solvent remaining in the electrode is reduced. The remaining amount of the first electrode-forming paste is preferably within the above range.

The content ratio of the organic solvent in the electrode-forming paste is preferably from 0.1 to 5.0 mass%, and more preferably from 0.3 to 3 mass%, based on the total amount (100 mass%) of the electrode-forming paste. When the content ratio is within the above range, rapid volatilization of the solvent is prevented in drying of the paste, cracks are less likely to occur in drying, the solvent composition is easily volatilized in removing the remaining solvent, and the amount of the solvent remaining in the electrode is reduced.

### Electrode

An electrode can be produced using the electrode-forming paste (the first and second electrode-forming pastes). The electrode may be either a positive electrode or a negative electrode, and a negative electrode is preferred.

The electrode includes, for example, at least a current collector and an electrode active material layer laminated (fixed) on the current collector. The electrode active material layer is a layer formed from the electrode-forming paste.

As the current collector, a known or typical current collector can be used. Examples of the constituent material of the current collector include stainless steel, aluminum, copper, nickel, titanium, and alloys containing one or more of these. In a case of a lithium ion battery, aluminum is particularly preferable as the current collector of the positive electrode, and copper is preferable as the current collector of the negative electrode.

The electrode can be produced by a production method including: applying the electrode-forming paste (first or second electrode-forming paste) onto the current collector to form a coating film; evaporating water from the coating film to form a pre-dried film; and vacuum drying the pre-dried film to form an electrode active material layer.

In the evaporating, the pre-dried film is preferably formed by drying under a drying condition in which the remaining amount of the organic solvent obtained by measuring the pre-dried film by a GC-MS method is 50 ppm or more (preferably 100 ppm or more). By performing drying under such a drying condition, the solvent can be volatilized gently, the occurrence of warpage or swelling at the end portion can be suppressed, and cracks are less likely to occur in the resulting electrode.

The thickness of the applied film of the electrode-forming paste is, for example, from 100 to 1000 µm. The drying of the coating film for producing the pre-dried film is performed, for example, at a temperature of from 70 to 150°C (preferably from 100 to 130°C) for 30 seconds to 60 minutes (preferably from 1 to 20 minutes).

In the vacuum drying, the electrode active material layer is preferably formed by drying under a drying condition in which the remaining amount of the organic solvent obtained by measuring the electrode active material layer by a GC-MS method is 40 ppm or less (preferably 25 ppm or less, and particularly preferably 15 ppm or less). By performing drying under such a drying condition, the organic solvent is less likely to remain in the resulting electrode active material layer and electrode.

The vacuum drying of the pre-dried film for producing the electrode active material layer is performed, for example, at a pressure of from 800 to 5000 Pa (preferably from 1300 to 3000 Pa) (absolute pressure) and a temperature of from 70 to 150°C (preferably from 80 to 120°C) for 2 to 72 hours (preferably from 5 to 24 hours).

The electrode can be produced as described above.

The thickness of the electrode is, for example, from 100 to 350 µm, preferably from 150 to 300 µm, and more preferably from 200 to 250 µm. Since the electrode-forming paste of the present disclosure has a small amount of remaining solvent, cracks are less likely to occur even in a thick film having a thickness of 100 µm or more (particularly, 200 µm or more).

### Secondary Battery

A secondary battery can be produced using the electrode. Note that, as used herein, the term "secondary battery" encompasses storage batteries (secondary batteries) that can be repeatedly used and energy storage devices in general. Examples of the secondary battery include a lithium secondary battery (lithium ion battery), a sodium secondary battery (sodium ion battery), a nickel hydrogen battery, a lithium ion capacitor, and an electric double layer capacitor. The lithium ion battery includes, for example, at least a positive electrode, a negative electrode, and an electrolyte. The lithium ion battery may further include a separator.

As the positive electrode and/or the negative electrode, those produced by using the first or second electrode-forming paste can be used. Also, as the positive electrode or the negative electrode, a known or typical electrode used for a secondary battery may be used.

A known or typical electrolyte used for a secondary battery can be used as the electrolyte. The electrolyte may be liquid, sol, or solid at room temperature (25°C). The electrolyte contains, for example, a supporting electrolyte and a solvent. The supporting electrolyte dissociates in the solvent to generate charge carrier ions, and in a lithium ion battery, generates lithium ions. The charge carrier ion is usually a cation such as a lithium ion, a calcium ion, or a magnesium ion, but may be an anion such as a fluoride ion. Specific examples of the supporting electrolyte include fluorine-containing lithium salts such as LiPF₆ and LiBF₄. Examples of the solvent include non-aqueous solvents such as aprotic solvents such as carbonates, ethers, esters, nitriles, sulfones, and lactones. When the solvent is a non-aqueous solvent, the electrolyte is a non-aqueous electrolyte solution.

The electrolyte may contain an additional component in addition to the supporting electrolyte and the solvents. Examples of the additional component include a film forming agent such as lithium bis(oxalato)borate (LiBOB) and vinylene carbonate (VC); and a gas generating agent such as biphenyl (BP) and cyclohexylbenzene (CHB).

The secondary battery can be used in known or typical secondary battery applications, and can be preferably used in applications excellent in high-rate performance (high-rate output performance and high-rate cycle performance), i.e., applications requiring a high output density. Specifically, the secondary battery can be preferably used as a power source (driving power supply) for a motor mounted on a vehicle, for example. The type of the vehicle is not particularly limited, but examples thereof include automobiles such as a plug-in hybrid vehicle (PHV), a hybrid vehicle (HV), and an electric vehicle (EV). Note that the secondary battery may be used in the form of an assembled battery in which a plurality of secondary batteries are connected in series and/or in parallel.

Each aspect disclosed in the present specification can be combined with any other feature disclosed in the present specification. The configurations, combinations thereof, and the like in each embodiment are exemplary, and additions, omissions, replacements, and other modifications of the configurations can be appropriately made without departing from the spirit of the present disclosure. In addition, each of the inventions according to the present disclosure is not limited by the embodiments or the following Examples.

### Examples

Hereinafter, an embodiment of the present disclosure will be described in more detail based on Examples.

### Preparation Example

### Preparation of Solvent Composition

Various solvents were added to achieve the compositions (unit: mass%) shown in Table 1, and the resultant mixtures were stirred until the solvents were compatible with each other, thereby producing solvent compositions 1 to 19.

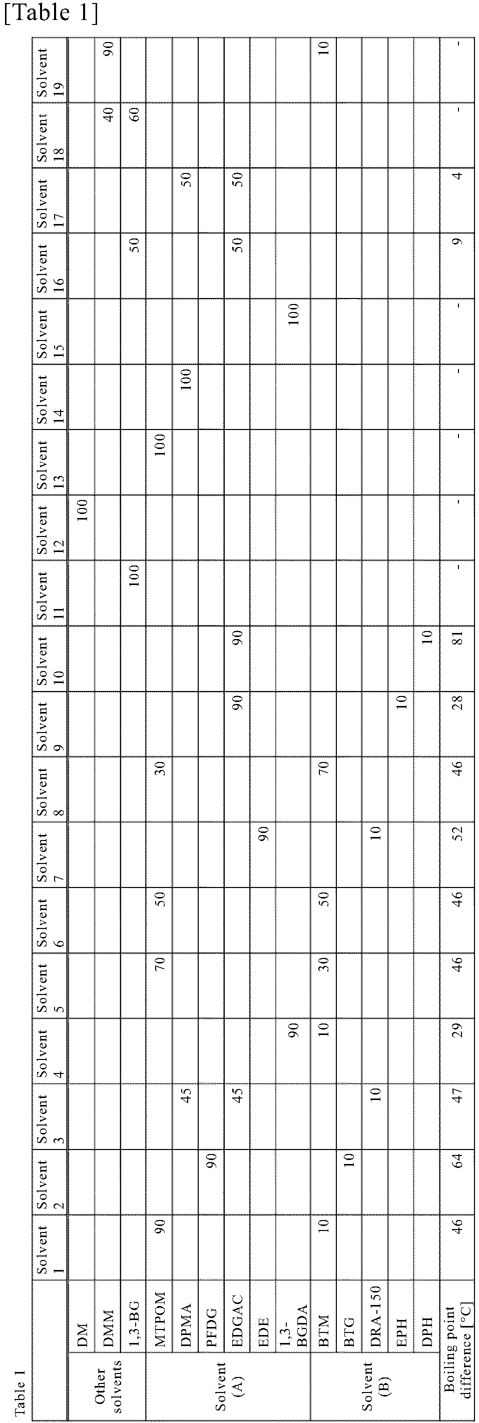

The solvents listed in Table 1 are as follows. As the δH value, a value calculated by HSPiP (ver. 5.4) (Hansen Solubility Parameters in Practice) software was adopted.

### Solvent (A)

- MTPOM: trade name "High-solve MTPOM", manufactured by Toho Chemical Industry Co., Ltd., tripropylene glycol dimethyl ether, boiling point of 215°C, δH of 4.52 (J/cm³)^{0.5}, water solubility of 23.6 g/100 g
- DPMA: Manufactured by Daicel Corporation, dipropylene glycol methyl ether acetate, boiling point of 213°C, δH of 5.78 (J/cm³)^{0.5}, water solubility of 19 g/100 g
- PFDG: Manufactured by Nippon Nyukazai Co., Ltd., dipropylene glycol monopropyl ether, boiling point of 212°C, δH of 8.35 (J/cm³)^{0.5}, water solubility of 15 g/100 g
- EDGAC: Manufactured by Daicel Corporation, diethylene glycol monoethyl ether acetate, boiling point of 217°C, δH of 7.21 (J/cm³)^{0.5}, water solubility of 100 g/100 g or more
- EDE: trade name "High-solve EDE", manufactured by Toho Chemical Industry Co., Ltd., diethylene glycol diethyl ether, boiling point of 189°C, δH of 5.61 (J/cm³)^{0.5}, water solubility of 100 g/100 g or more
- 1,3-BGDA: Manufactured by Daicel Corporation, 1,3-butylene glycol diacetate, boiling point of 232°C, δH of 7.21 (J/cm³)^{0.5}, water solubility of 5 g/100 g

### Solvent (B)

- BTM: trade name "High-solve BTM", manufactured by Toho Chemical Industry Co., Ltd., triethylene glycol butyl methyl ether, boiling point of 261°C, δH of 5.89 (J/cm³)^{0.5}, water solubility of 100 g/100 g or more
- BTG: Manufactured by Nippon Nyukazai Co., Ltd., triethylene glycol monobutyl ether, boiling point of 276°C, δH of 9.14 (J/cm³)^{0.5}, water solubility of 100 g/100 g or more
- DRA-150: trade name "DRA-150", manufactured by Daicel Corporation, triacetin, boiling point of 260°C, δH of 8.67 (J/cm³)^{0.5}, water solubility of 8 g/100 g
- EPH: trade name "High-solve EPH", manufactured by Toho Chemical Industry Co., Ltd., ethylene glycol monophenyl ether, boiling point of 245°C, δH of 12.14 (J/cm³)^{0.5}, water solubility of 2.6 g/100 g
- DPH: trade name "High-solve DPH", manufactured by Toho Chemical Industry Co., Ltd., diethylene glycol monophenyl ether, boiling point of 298°C, δH of 10.92 (J/cm³)^{0.5}, water solubility of 3.5 g/100 g

### Other Solvents

- 1,3-BG: Manufactured by Daicel Corporation, 1,3-butylene glycol, boiling point of 208°C, δH of 19.87 (J/cm³)^{0.5}, water solubility of 100 g/100 g or more
- DM: trade name "High-solve DM", manufactured by Toho Chemical Industry Co., Ltd., diethylene glycol monomethyl ether, boiling point of 194°C, δH of 13.20 (J/cm³)^{0.5}, water solubility of 100 g/100 g or more
- DMM: Manufactured by Daicel Corporation, dipropylene glycol dimethyl ether, boiling point of 175°C, δH of 4.68 (J/cm³)^{0.5}, water solubility of 53 g/100 g

### Examples 1 to 10 and Comparative Examples 1 to 9

### Preparation of Negative Electrode Secondary Battery Electrode-Forming Paste

Graphite (trade name "MAGE3", manufactured by Resonac Holdings Corporation) as negative electrode active materials, 1 wt.% aqueous solutions of carboxymethyl cellulose (trade name "CMC2200", manufactured by Daicel Miraizu Ltd.) as thickeners, solvent compositions, and SBR (trade name "JSR104", manufactured by JSR Corporation) were put into a mixer and mixed to achieve the corresponding composition (in parts by mass) shown in Table 2, thereby producing a negative electrode secondary battery electrode-forming paste.

### [Table 2]

**Table 2**

| | Graphite | Thickener | Solvent composition | | SBR | Crack resistance | Residual solvent property |
|---|---|---|---|---|---|---|---|
| Examples | MAGE3 | 1 wt.% CMC aqueous solution | Type | Amount | JSR104 | | |
| Example 1 | 9.8 | 9.9 | Solvent 1 | 0.2 | 0.2 | ○ | ○ |
| Example 2 | 9.8 | 9.9 | Solvent 2 | 0.2 | 0.2 | ○ | ○ |
| Example 3 | 9.8 | 9.9 | Solvent 3 | 0.2 | 0.2 | ○ | ○ |
| Example 4 | 9.8 | 9.9 | Solvent 4 | 0.2 | 0.2 | ○ | ○ |
| Example 5 | 9.8 | 9.9 | Solvent 5 | 0.2 | 0.2 | ○ | ○ |
| Example 6 | 9.8 | 9.9 | Solvent 6 | 0.2 | 0.2 | ○ | ○ |
| Example 7 | 9.8 | 9.9 | Solvent 7 | 0.2 | 0.2 | ○ | △ |
| Example 8 | 9.8 | 9.9 | Solvent 8 | 0.2 | 0.2 | ○ | △ |
| Example 9 | 9.8 | 9.9 | Solvent 9 | 0.2 | 0.2 | ○ | △ |
| Example 10 | 9.8 | 9.9 | Solvent 10 | 0.2 | 0.2 | ○ | △ |
| Comparative Example 1 | 9.8 | 9.9 | Solvent 11 | 0.2 | 0.2 | × | × |
| Comparative Example 2 | 9.8 | 9.9 | Solvent 12 | 0.2 | 0.2 | ○ | × |
| Comparative Example 3 | 9.8 | 9.9 | Solvent 13 | 0.2 | 0.2 | × | ○ |
| Comparative Example 4 | 9.8 | 9.9 | Solvent 14 | 0.2 | 0.2 | × | ○ |
| Comparative Example 5 | 9.8 | 9.9 | Solvent 15 | 0.2 | 0.2 | × | ○ |
| Comparative Example 6 | 9.8 | 9.9 | Solvent 16 | 0.2 | 0.2 | × | Δ |
| Comparative Example 7 | 9.8 | 9.9 | Solvent 17 | 0.2 | 0.2 | × | ○ |
| Comparative Example 8 | 9.8 | 9.9 | Solvent 18 | 0.2 | 0.2 | × | Δ |
| Comparative Example 9 | 9.8 | 9.9 | Solvent 19 | 0.2 | 0.2 | × | × |

### Evaluation

The negative electrode secondary battery electrode-forming pastes produced in Examples and Comparative Examples were evaluated as follows. The results are shown in Table 2.

### (1) Crack Resistance

The negative electrode secondary battery electrode-forming paste produced in each of Examples and Comparative Examples was applied onto a copper foil using an automatic coating machine with the coating thickness setting value within a range of from 400 to 600 µm, and dried at 110°C for 10 minutes under atmospheric pressure to produce a negative electrode for crack resistance evaluation. Using a cylindrical mandrel bending tester manufactured by BEVS Industrial Co., Ltd., the prepared negative electrode piece was fixed with a main body clamp, and the crack resistance was evaluated from the minimum diameter of the mandrel at which the electrode started to crack or peel off from the copper foil after the handle was rotated by 180°. The electrode having the minimum diameter of the mandrel smaller than that of Comparative Example 1 was marked with ○, and the electrode having the minimum diameter larger than or equal to that of Comparative Example 1 was marked with ×. When the crack resistance is good, the electrode is judged to have high flexibility and to be suitable for thickening.

### (2) Residual Solvent Property

The negative electrode secondary battery electrode-forming paste produced in each of Examples and Comparative Examples was applied onto a copper foil using an automatic coating machine with the coating thickness setting value of 600 µm, and dried at 110°C for 10 minutes under atmospheric pressure followed by vacuum drying at 110°C for 5 hours to remove the residual solvent, thereby producing a negative electrode for residual solvent property evaluation. The resulting negative electrode was put in a headspace container, the mass (W) was accurately weighed, and analysis was performed using a headspace (trade name "HS-20", manufactured by Shimadzu Corporation) and GC/MS (trade name "GC/MS-QP2010 Ultra", manufactured by Shimadzu Corporation, column: DB-5MS 30 m-0.25 mm, I.D.-0.25 µm). Then, the content (Ws) of the remaining solvent in the negative electrode was determined from a calibration curve separately prepared. From these, the residual solvent concentration was calculated according to the following equation. The case where the residual solvent concentration was 20 ppm or less was marked with ○, the case where the concentration was more than 20 ppm and 50 ppm or less was marked with △, and the case where the concentration was more than 50 ppm was marked with x. $Residual solvent concentration \left(ppm\right) = Ws / W \times 100 \times 10000$

As shown in Table 2, in the case of using the negative electrode secondary battery electrode-forming paste produced by using the solvent composition in which the solvent (A) and the solvent (B) were used in combination (Examples), the crack resistance of the negative electrode was excellent, and the amount of the remaining solvent was small. On the other hand, when a solvent composition not containing the solvent (A) and/or the solvent (B) was used, cracks were likely to occur in drying due to rapid drying of the solvent (Comparative Examples). In addition, when a solvent composition not containing the solvent (A) was used, the amount of the remaining solvent tended to increase (Comparative Examples 1, 2, and 9).

Hereinafter, variations of the invention according to the present disclosure will be described.

[Appendix 1] A solvent composition for an electrode-forming paste, the solvent containing:
a solvent (A) having a boiling point of from 180°C to 240°C and a hydrogen bond term δH of the Hansen solubility parameter of from 4 to 13 (J/cm³)^{0.5}; and
a solvent (B) having a boiling point higher than the boiling point of the solvent (A) and a hydrogen bond term δH of the Hansen solubility parameter of from 4 to 13 (J/cm³)^{0.5}, in which
the boiling point of the solvent (B) is higher than 240°C and 300°C or lower.

[Appendix 2] A solvent composition for an electrode-forming paste, the solvent containing:
a solvent (A) having a boiling point of from 180°C to 240°C and a hydrogen bond term δH of the Hansen solubility parameter of from 4 to 13 (J/cm³)^{0.5}; and
a solvent (B) having a boiling point higher than the boiling point of the solvent (A) and a hydrogen bond term δH of the Hansen solubility parameter of from 4 to 13 (J/cm³)^{0.5}, in which
the boiling point of the solvent (B) is higher than the boiling point of the solvent (A) by 25°C or more.

[Appendix 3] The solvent composition for an electrode-forming paste according to Appendix 1 or 2, in which the solvent (A) has a solubility in water of 5 g/100 g or more, and the solvent (B) has a solubility in water of 1 g/100 g or more.

[Appendix 4] The solvent composition for an electrode-forming paste according to any one of Appendices 1 to 3, in which the solvent (A) has an ether skeleton and/or an ester skeleton.

[Appendix 5] The solvent composition for an electrode-forming paste according to any one of Appendices 1 to 4, in which
the solvent (A) is one or more selected from the group consisting of tripropylene glycol dimethyl ether, diethylene glycol butyl methyl ether, diethylene glycol diethyl ether, dipropylene glycol methyl ether acetate, triethylene glycol dimethyl ether, 1,3-butylene glycol diacetate, diethylene glycol monoethyl ether acetate, propylene glycol diacetate, dipropylene glycol monopropyl ether, dipropylene glycol monobutyl ether, and diethylene glycol monobutyl ether; and
the solvent (B) is one or more selected from the group consisting of triethylene glycol butyl methyl ether, diethylene glycol monobutyl ether acetate, tetraethylene glycol dimethyl ether, tripropylene glycol monomethyl ether, diethylene glycol monohexyl ether, triacetin, triethylene glycol monobutyl ether, ethylene glycol monophenyl ether, and diethylene glycol monophenyl ether.

[Appendix 6] The solvent composition for an electrode-forming paste according to any one of Appendices 1 to 5, in which a ratio (WA/W) of a mass (WA) of the solvent (A) to a mass (W) of total organic solvents contained in the solvent composition is 50 mass% or more.

[Appendix 7] An electrode-forming paste, containing:
the solvent composition for an electrode-forming paste described in any one of Appendices 1 to 6;
water;
an electrode active material; and
a binder.

[Appendix 8] The electrode-forming paste according to Appendix 7, in which a content ratio of the solvent composition for an electrode-forming paste is from 0.1 to 5.0 mass% based on a total amount of the electrode-forming paste.

[Appendix 9] An electrode-forming paste, containing:
an organic solvent;
water;
an electrode active material; and
a binder,
in which
a pre-dried film produced by applying the electrode-forming paste on a copper foil to a thickness of 600 µm and hot-air drying the electrode-forming paste at 110°C for 10 minutes has a remaining amount of the organic solvent of 50 ppm or more measured by a GC-MS method; and
a dried film produced by vacuum drying the pre-dried film at an absolute pressure of 1500 Pa or less for 300 minutes has a remaining amount of the organic solvent of 40 ppm or less measured by a GC-MS method.

[Appendix 10] A method for producing an electrode including an electrode active material layer on a current collector, the method including:
applying the electrode-forming paste described in any one of Appendices 7 to 9 onto the current collector to form a coating film;
evaporating water from the coating film to form a pre-dried film; and
vacuum drying the pre-dried film to form the electrode active material layer.

[Appendix 11] The method for producing an electrode according to Appendix 10, in which, in the evaporating, the pre-dried film is formed by drying under a drying condition in which a remaining amount of the organic solvent obtained by measuring the pre-dried film by a GC-MS method is 50 ppm or more.

[Appendix 12] The method for producing an electrode according to Appendix 10 or 11, in which, in the vacuum drying, an electrode active material layer is formed by drying under a drying condition in which a remaining amount of the organic solvent obtained by measuring the electrode active material layer by a GC-MS method is 40 ppm or less.

[Appendix 13] A method for producing a secondary battery, including:
producing an electrode by the method for producing an electrode described in any one of Appendices 10 to 12; and
producing a secondary battery using the produced electrode.

## Claims

1. A solvent composition for an electrode-forming paste, the solvent composition comprising:
a solvent (A) having a boiling point of from 180°C to 240°C and a hydrogen bond term δH of the Hansen solubility parameter of from 4 to 13 (J/cm³)^{0.5}; and
a solvent (B) having a boiling point higher than the boiling point of the solvent (A) and a hydrogen bond term δH of the Hansen solubility parameter of from 4 to 13 (J/cm³)^{0.5}, wherein
the boiling point of the solvent (B) is higher than 240°C and 300°C or lower.

2. A solvent composition for an electrode-forming paste, the solvent composition comprising:
a solvent (A) having a boiling point of from 180°C to 240°C and a hydrogen bond term δH of the Hansen solubility parameter of from 4 to 13 (J/cm³)^{0.5}; and
a solvent (B) having a boiling point higher than the boiling point of the solvent (A) and a hydrogen bond term δH of the Hansen solubility parameter of from 4 to 13 (J/cm³)^{0.5}, wherein
the boiling point of the solvent (B) is higher than the boiling point of the solvent (A) by 25°C or more.

3. The solvent composition for an electrode-forming paste according to claim 1 or 2, wherein the solvent (A) has a solubility in water of 5 g/100 g or more, and the solvent (B) has a solubility in water of 1 g/100 g or more.

4. The solvent composition for an electrode-forming paste according to claim 1 or 2, wherein the solvent (A) contains an ether skeleton and/or an ester skeleton.

5. The solvent composition for an electrode-forming paste according to claim 1 or 2, wherein
the solvent (A) is one or more selected from the group consisting of tripropylene glycol dimethyl ether, diethylene glycol butyl methyl ether, diethylene glycol diethyl ether, dipropylene glycol methyl ether acetate, triethylene glycol dimethyl ether, 1,3-butylene glycol diacetate, diethylene glycol monoethyl ether acetate, propylene glycol diacetate, dipropylene glycol monopropyl ether, dipropylene glycol monobutyl ether, and diethylene glycol monobutyl ether; and
the solvent (B) is one or more selected from the group consisting of triethylene glycol butyl methyl ether, diethylene glycol monobutyl ether acetate, tetraethylene glycol dimethyl ether, tripropylene glycol monomethyl ether, diethylene glycol monohexyl ether, triacetin, triethylene glycol monobutyl ether, ethylene glycol monophenyl ether, and diethylene glycol monophenyl ether.

6. The solvent composition for an electrode-forming paste according to claim 1 or 2, wherein a ratio (WA/W) of a mass (WA) of the solvent (A) to a mass (W) of total organic solvents contained in the solvent composition is 50 mass% or more.

7. An electrode-forming paste comprising:
the solvent composition for an electrode-forming paste described in claim 1 or 2;
water;
an electrode active material; and
a binder.

8. The electrode-forming paste according to claim 7, wherein a content ratio of the solvent composition for an electrode-forming paste is from 0.1 to 5.0 mass% based on a total amount of the electrode-forming paste.

9. An electrode-forming paste comprising:
an organic solvent;
water;
an electrode active material; and
a binder,
wherein
a pre-dried film produced by applying the electrode-forming paste on a copper foil to a thickness of 600 µm and hot-air drying the electrode-forming paste at 110°C for 10 minutes has a remaining amount of the organic solvent of 50 ppm or more measured by a GC-MS method; and
a dried film produced by vacuum drying the pre-dried film at an absolute pressure of 1500 Pa or less for 300 minutes has a remaining amount of the organic solvent of 40 ppm or less measured by a GC-MS method.

10. A method for producing an electrode including an electrode active material layer on a current collector, the method comprising:
applying the electrode-forming paste described in claim 7 onto the current collector to form a coating film;
evaporating water from the coating film to form a pre-dried film; and
vacuum drying the pre-dried film to form the electrode active material layer.

11. The method for producing an electrode according to claim 10, wherein, in the evaporating, the pre-dried film is formed by drying under a drying condition in which a remaining amount of the organic solvent obtained by measuring the pre-dried film by a GC-MS method is 50 ppm or more.

12. The method for producing an electrode according to claim 10, wherein, in the vacuum drying, an electrode active material layer is formed by drying under a drying condition in which a remaining amount of the organic solvent obtained by measuring the electrode active material layer by a GC-MS method is 40 ppm or less.

13. A method for producing a secondary battery, the method comprising:
producing an electrode by the method for producing an electrode described in claim 10; and
producing a secondary battery using the produced electrode.
